# EUROPEAN PATENT SPECIFICATION

(11) **EP 1 662 817 B1**
(45) Date of publication and mention of the grant of the patent: **27.08.2008**
(21) Application number: 05292540.1
(22) Date of filing: 30.11.2005
(51) Int. Cl.: H04Q 7/22

(54) **System and method for providing information on a manner of communicating**
System und Verfahren zur Bereitstellung von Information auf beliebige Art und Weise der Kommunication
Système et procédé pour fournir des informations relatives à une manière de communiquer

(30) Priority: 30.11.2004 US 145
(43) Date of publication of application: 31.05.2006
(73) Proprietor: France Télécom, 75015 Paris (FR)
(72) Inventor: Li, Yanming, South San Francisco CA 94080 (US)
(74) Representative: Thach, Tum

(56) References cited:
- EP-A- 0 484 067
- EP-A- 0 608 654
- WO-A-03/039172
- US-A- 5 872 841

## Description

### FIELD OF THE INVENTION

The present invention relates to the field of communication. More particularly, the present invention relates to systems and methods for managing an increasingly complex communication environment.

### BACKGROUND OF THE INVENTION

Current technology allows for an individual to communicate with others via multiple communication devices and multiple communication channels. Examples of such communication devices and channels are: telephone land lines, mobile telephones, pagers, e-mail, text messaging, fax, instant messaging, short message service, IP phone, etc. The use of multiple communication devices and channels has greatly increased the availability of the individual for inter-personal communication. It has also increased the complexity of contacting the individual by presenting a bewildering array of options when attempting to communicate.

A person attempting to contact another has no way to quantitatively or qualitatively judge which communication channel will be most effective. The person may try each communication channel in turn until they reach the other person. This can be a time consuming and frustrating task for the requesting party. In addition, the requested party may be unable to limit their availability to all requesting parties. As a result, the person may be interrupted during important tasks by others attempting to communicate with them.

What is needed are systems and methods for managing an increasingly complex communication environment. It is toward this end that the present invention is directed.

Document EP0608654 discloses a method for storing in a database subscriber related information (such as a calendar indicating the location of the subscriber) and providing it to a calling party, or using it for routing an incoming call to an appropriate telephone number.

Document US5872841 discloses an apparatus for retrieving a called party's calendar in order to determine an available time slot for placing a call.

### BRIEF SUMMARY OF THE INVENTION

The present invention comprises systems and methods for providing information on a manner of communicating. In accordance with an embodiment of the invention, information is provided to an information server regarding a plurality of communication channels which can be used to reach the first user. A request is received from a second user for a recommendation on a manner of communicating with the first user. The recommendation is generated by an information server based on the information. The information server provides the recommendation to the second user.

### BRIEF DESCRIPTION OF THE DRAWINGS

FIG. 1 is a block diagram illustrating an environment in which an embodiment of the present invention may be implemented;
FIG. 2 is a block diagram illustrating a method in accordance with an embodiment of the present invention;
FIG.3 is a block diagram illustrating information that might be employed by an embodiment of the present invention; and
FIG. 4 is a block diagram illustrating a system in accordance with an embodiment of the present invention.

### DETAILED DESCRIPTION OF THE INVENTION

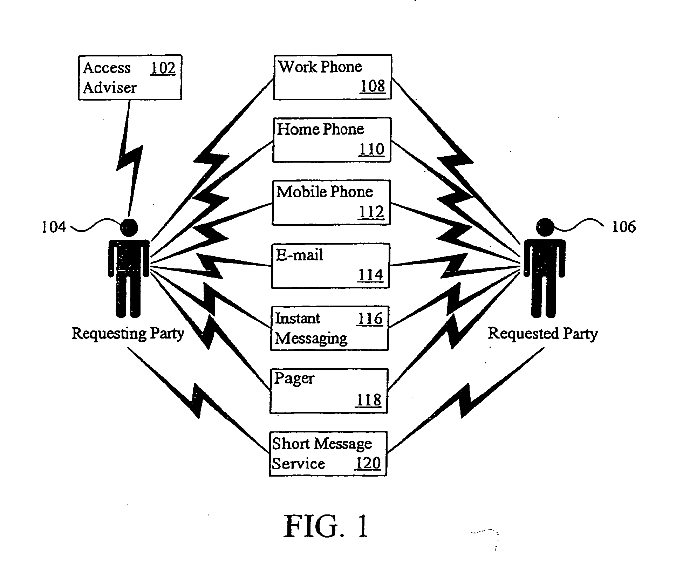

FIG. 1 illustrates an environment in which an access adviser 102 in accordance with an embodiment of the invention may be implemented. The access adviser 102 provides a recommendation to a requesting party 104 on a manner of communicating when attempting to contact a requested party 106.

The requesting party 104 wishes to communicate with the requested party 106. The requested party 106 may be reached via various communication channels such as: a work phone 108; a home phone 110; a mobile phone 112; an electronic mail account 114; an instant messaging service 116; a pager 118; a short message service (SMS) 120 or some other communication channel or device. The requested party 106 provides information to the access advisor 102 regarding the channels by which the requested party 106 may be reached. This includes contact information, such as a telephone number, e-mail address, preferences, a calendar of the requested party's activities, and so forth.

Before the requesting party 104 attempts to contact the requested party 106, the requesting party 104 queries the access adviser 102 for a recommended manner of accessing the requested party 106. The requesting party 104 identifies the requested party 106, and may provide additional information, such as the requesting party's identification, the time or time period during which they wish to contact the requested party 106, the subject of the communication (e.g., work-related, personal, etc.), the urgency of the communication, and other information that might facilitate the access adviser 102 in its task. The access adviser 102 then indicates to the requesting party 104 which is the recommended manner of communicating based on information received from the parties and possibly also based on other information. This recommendation may include recommending a specific communication channel, a time to initiate the communication and so forth. The access adviser 102 may also initiate a communication using the recommended communication channel.

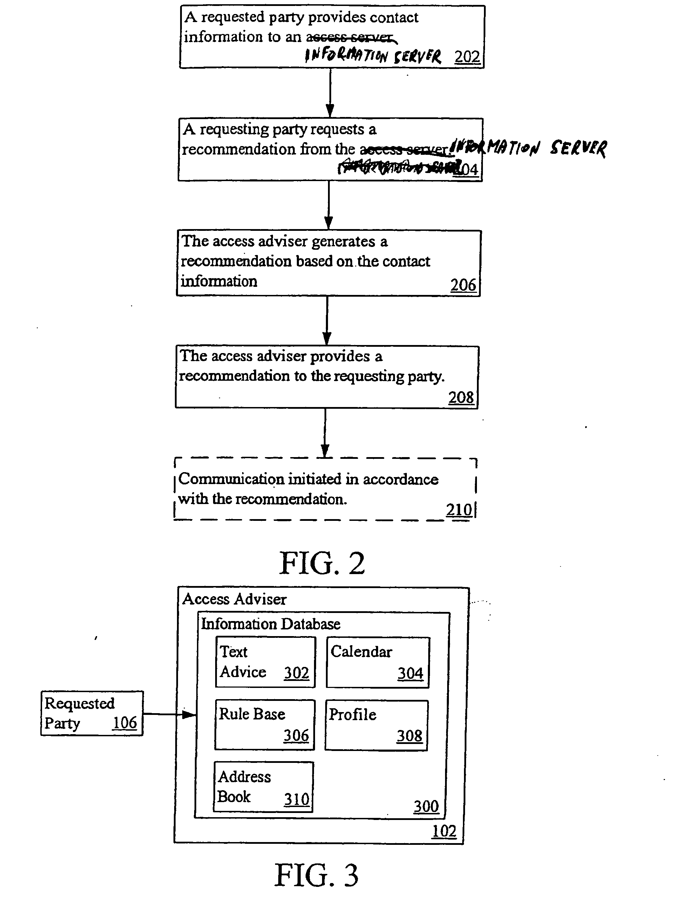

FIG. 2 is a block diagram illustrating a method in accordance with an embodiment of the present invention. The requested party 106 registers with the access adviser 102 in a registration step 202 (e.g., via the internet) by providing contact information to the access adviser 102. The contact information may include contact addresses for the requested party 106, such as: an address for the electronic mail account 114; an address for the instant messaging service 116; a number for the mobile phone 112; a number for a fixed line (e.g., the work phone 108 or the home phone 110); a number for the pager 118; and an address for the SMS 120. A calendar service may or may not be associated with one or more of the contact addresses. The contact information may also include contact information for a service provider of one or more of the channels. The requested party 106 may also need to give the access advisor 102 permissions to access those service providers as appropiate.

After the registration step 202, the requested party 106 may configure the requested party's 106 contact preferences. Different configuration choices are provided by the access advisor 102 to the requested party 106. For example, the requested party 106 may simply offer a text description to describe the requested party's 106 contact preferences. Alternatively, the requested party 106 may instruct the access advisor 102 to generate contact preferences based on a calendar. The requested party 106 may also instruct the access advisor to generate contact preferences based on a list of contacts.

The requesting party 104 queries the access adviser 102 in a querying step 204. The query includes a request for a recommended manner of communicating with the requested party 106. The access adviser 102 generates a recommendation based on the contact information in a generation step 206. The access adviser 102 provides the recommendation to the requesting party 104 in a recommendation providing step 208. An optional step 210 may include initiating a communication in accordance with the recommendation. The step 210 may be performed by the access adviser 102 or by the requesting party 104.

FIG. 3 is a block diagram showing information that might be employed by an embodiment of the present invention. The requested party 106 may provide the access adviser 102 with the requested party's contact information which is stored in an information database 300. The requested party's contact information may also be obtained from other sources. According to an embodiment, the contact information includes: text advice 302; a calendar 304; a rule base 306; a profile 306 and an address book 310. The text advice 302 is contact advice in textual format (though it may include information in other graphical formats or in audio format) that is prepared by the requested party 106 for distribution by the access adviser 102. The calendar 304 may include a schedule of activities for the requested party 106 for different time periods. For example, the calendar 304 may specify periods during which the requested party 106 is expected to be unavailable due to meetings, travel, etc. The rule base 306 includes one or more conditional access rules provided by the requested party 106 that instruct the access adviser 102 on what recommendation to provide under one or more specified conditions. The profile 308 is based on the requested party's 106 communication habits. The address book 310 includes a list of requesting parties known to the requested party 106, such as family members, co-workers, acquaintances, and so forth.

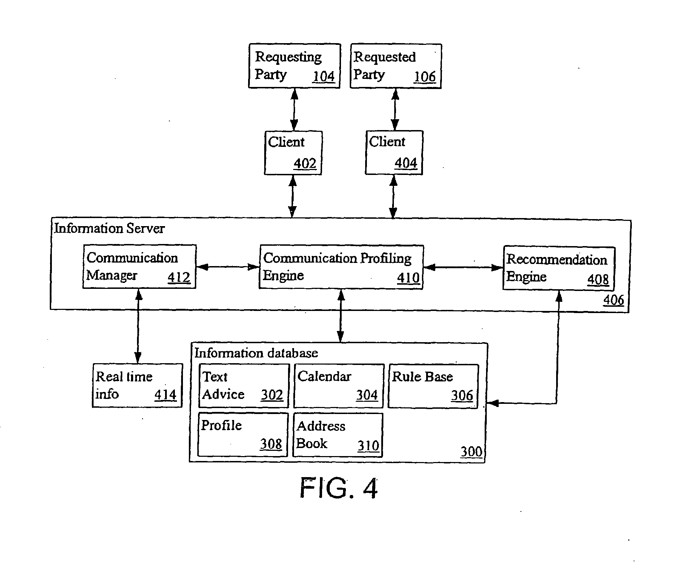

FIG. 4 is a block diagram illustrating a system in accordance with an embodiment of the present invention. The requesting party 104 may interface with the access adviser 102 via a client 402 for submitting queries to the access adviser 102. The requested party 106 may interface with the access adviser 102 via a client 404 for uploading, reviewing and modifying the contact information.

The clients 402 and 404 may include applications that can be run on a computer, personal data assistant (PDA), a mobile phone or other device that can communicate with the access adviser 102. For example, the clients 402 and 404 may include a web browser that communicates with the access advisor 102 via the Internet. For example, a web site accessed by the browser may present a graphical user interface to the requesting party 104 or by the requested party 106. Alternatively, the clients 402 and 404 may include a custom software application program for interacting with the access adviser 102 via another communication medium. The requested party 106 may use the client 404 to upload, review and modify the contact information. The parties 104 and 106 may access the clients 402 and 404 via a telephone, in which case the clients 402 and 404 may provide touch-tone menus and/or voice recognition functionality for enabling the parties 104 and 106 to input and receive information.

The graphic user interface may present information fields that are filled out by the requesting party 104 or by the requested party 106. For example, the fields may provide advice and limitations on what information the requesting party 104 may submit along with a query. In one embodiment, information that may be provided by the requesting party 104 is dependent on content of the information database 300 that indicates information to be requested from the requested party 106. For example, information that may be provided by the requesting party 104 may be dependent on the identity of the requesting party 104. In another embodiment, the information that may be provided by the requesting party 104 may be independent of the identity of the requesting party 104.

Each client 402 and 404 preferably attempts to securely identify the requesting party 104 or the requested party 106. If the client 402 cannot securely identify the requesting party 104 then the requesting party 104 may be identified as anonymous. The requested party 106 may place limitations on what information may be disclosed to an anonymous requesting party 104. The requested party 106 may place limitations on what information may be presented to particular identified requesting parties 104 and parties unknown to the requested party 106 (i.e., parties who are identified but are not included in the requesting party's address book 310). These limitations may be included in the rule base 306.

The access adviser 102 may be implemented as an application that is located on an information server 406. The information server 406 includes or may be communicatively connected to a recommendation engine 408 which may be implemented as a software application. The recommendation engine 408 generates the recommended manner of communication based on the information in the database 300. Thus, the recommendation engine 408 is communicatively connected to the database 300. The requested party 106 may provide this information to the recommendation engine 408 via the client 404 or may allow the recommendation engine 408 access to applications or data that include this information.

The information server 406 includes or may be communicatively connected to a communication profiling engine 410 which may be implemented as a software application. The communication profiling engine 410 may generate the profile 306. For example, this may be accomplished by the communication profiling engine 410 contacting providers of each of the plurality of communication channels to gather information for generating the profile 306. The providers may include, for example, a cellular telephone service provider or Internet Service Provider (ISP) that provides email services to the requested party 106. The requested party 106 may give permission to the communication profiling engine 410 to contact one or more of the providers, which may include providing the communication profiling engine 410 with a information needed to access the providers, (e.g., logins or passwords). The providers may give the communication profiling engine 410 unlimited access to this information, such as access to each email sent or received by the requested party 106 or may provide only limited access to statistical information about the requested parties 106 communication habits, such as the average time delay between the requesting party 106 receiving an email message and sending a responsive email.

The communication profiling engine 410 includes or may be communicatively connected to a communication manager 412 which may be implemented as a software application. The communication profiling engine 410 may request that the communication manager 412 generate real time information 414 about the status of the plurality of communication channels. This may be accomplished for example by the communication manager 412 contacting one or more providers of the plurality of communication channels to obtain information which indicates the current status of a channel, particularly, whether the communication channel is in use, disabled or available for use. The requested party 106 may provide permission and other information in advance so that the communication manager 412 is able to contact the providers to obtain this status information. The communication profiling 410 may store and use the real time information 414 for generating the profile 308.

The requesting party 104 submits a query to the information server 406. The query is a request for a recommended manner of communicating with the requested party 106, and includes an identification of the requested party 106. The requested party 106 may be identified by name, phone number, email address, login name, or some other identification method. The query may also include information about the identity of the requesting party 104, the urgency of the communication, a time or time period that the requesting party wishes to initiate the communication, and the subject matter of the communication.

When the information server 406 receives a query from a requesting party, the information server 406 may pass on the query to the recommendation engine 408. The recommendation engine 408 may first determine what contact information 300 is associated with the requested party 106. If the contact information 300 is limited to the text advice 302 message, then the recommendation engine 408 may provide the text advice 302 message as the recommendation in response to the query.

The text advice 302 is contact advice prepared by the requested party 106 for distribution by the access adviser 102. The text advice 302 may include a list of contact times that the requested party 106 can best be reached by each phone number, electronic mail address, or some other combination of contact information. Thus, the text advice 302 may recommend a particular communication channel and may include advice on times to use particular communication channels. Further, the text advice 302 may include advice on which communication channel to use depending on the subject matter or the urgency of the communication. The requested party 106 may provide a plurality of text advice 302 messages. The text advice 302 may take the form of one or more sentences or a simple list. For example the text advice 302 may be "Between the hours of 10 and 3 I can be reached via 555-1012. Otherwise I can be reached via electronic mail at blank@blank.com." Another example of text advice 302 may be, "If the subject matter of the call is work-related please call 555-1012. If the subject matter of the call is personal, then please call this number 555-1013." Another example of text advice 302 may be, "I can be reached via 555-1012. If the matter is urgent I can be reached via my instant messaging service." The contact information database 300 may include multiple text advice 302 messages. The recommendation engine 408 may use the rule base 306 to generate text advice 302 message to provide as the recommendation in response to the query. Thus, a particular text message may be provided depending upon the identity of the requesting party 104.

The recommendation engine 408 understands how information is arranged within the information database 300 through a shared information model across the information server 406. The shared information model defines common vocabularies and corresponding taxonomy across the whole system including the information server 406.

The recommendation engine 408 may provide the calendar 304 as the recommendation in response to the query. The recommendation engine 408 may expose, or allow to be exposed, information in an electronic scheduling program which indicates the requested party's 106 schedule of activities (e.g., meetings, events, etc.), a list of time periods during which the requested party 106 may be contacted and so forth. The recommendation engine 408 may use the rule base 306 to determine if the requesting party 104 is allowed access to the calendar 304. The calendar 304 may associate particular time periods with particular communication channels. For example, if the requested party is in a meeting during a particular time period, this may indicate that the requested party should be contacted via email during that time period. The recommendation engine 408 may respond to the query by recommending the particular communication channel associated with the time period closest to the time of the query or a time period indicated in the query.

The recommendation engine 408 may calculate a recommended time or time periods based on events recorded in the calendar 304. The recommendation engine 408 may use rules in the rule base 306 to make this calculation. The calendar 304 may indicate a recommended time or time period to initiate communication. Thus, the recommendation engine 408 may respond to the query by recommending the time or the time period indicated by the calendar 304. The requesting party 104 may be offered a reminder to occur at the recommended time to initiate communication with the requested party 106. The reminder may take the form of an audible alarm or a scheduled event in a calendaring application associated with the requesting party 104. For example, the client 402 may send an alarm for the communication initiation time to a device associated with the requesting party 104, such as the requesting party's computer, handheld communication device, cellular telephone, a personal data assistant (PDA) or some other device that the access adviser 102 has access to and which an alarm may be set.

The calendar 304 may list events and types of events. The rule base 306 may include instructions on what recommendations to make if the query is made during events or particular types of events, if the time or time period indicated in the query conflicts with these events. These instructions may be conditional on the identity of the requesting party 104 or other information in the query. The recommendation engine 408 may generate the recommendation in accordance with the calendar 304 and the rule base 306. For example, if the calendar 304 indicates that the requested party 106 is away from a land-line then the mobile phone 112 number may be recommended.

The information server 406 may retrieve data from an electronic scheduling program and store it in the calendar 304 of information database 300 for later use. For example, the electronic scheduling program may be located on a personal computer or PDA used by the requesting party 106 to which the information server 406 may be communicatively connected. The calendar data 304 may be used by the recommendation engine 408 when generating the recommendation. The stored calendar 304 is preferably updated on a regular basis. The electronic scheduling program may instruct the information server 406 to update the stored calendar 304 data when changes are made. The information server 406 may determine if the stored calendar 304 data needs to be updated when a query is made by the requesting party 104. The information server 406 may provide the stored calendar 304 data to the requesting party 104, allowing the requesting party 104 to come to their own conclusions on how best to contact the requesting party 106.

The communication manager 412 may generate the real time information 414 about the availability of the requested party 106 including status of communication channels associated with the requested party 106. For example, the real time information 414 may indicate that a particular communication channel is currently in use, is turned off, or is available for use. The real time information 414 may indicate that a particular communication channel is being forwarded to another communication channel (e.g., "call-forwarding" for telephone service). For example, the communication manager 412 may query a phone network to determine the status of a particular telephone line. As another example, the communication manager 412 may determine if the requested party 106 is logged into the instant messaging service 116, and the status of the requested party 106 on the instant messaging service 116.

The access adviser 102 may then use the real time information 414 to generate a recommendation. The recommendation engine 408 may use the real time information 414 to choose among parallel communication paths. For example, if an instantaneous communication path such as a phone line or the instant messaging service 116 is in use then the recommendation engine 408 may recommend a non-instantaneous communication path such as the pager 118 or the electronic mail message 114 or may recommend initiating the communication at a later time. The recommendation engine 408 may use the profile 306 within the limitations set by other information in the database 300.

The rule base 306 includes one or more conditional access rules that specify limitations and privileges associated with particular communication channels which are conditional on one or more factors, such as the identity of the requesting party 104, the time of the requested communication, the status of the requesting party 104, or any combination of these limitations. The recommendation engine 408 may use the rule base 306 in conjunction with other information in the database 300 to generate the recommendation.

An access rule may indicate a conditional preferred communication channel. As examples: an access rule may indicate that the requested party 106 prefers to be reached via a particular communication channel during a particular time period; an access rule may indicate that the requested party 106 prefers that particular requesting parties 104 use one or more particular communication channels; an access rule may indicate that particular requesting parties 104 do not receive recommendations that include one or more communication channels; an access rule may indicate that particular requesting parties 104 have access to all communication channels; or, an access rule may indicate that particular requesting parties 104 only be given a recommendation to use one or more communication channels during particular time periods.

The requested party 106 may provide the access adviser 102 with the rule base 306 via the client 404. The client 404 may provide a graphical user interface for the requested party 106 to provide the rules. For example, the client 404 may present the requested party 106 with a series of electronic forms to fill out. Alternatively, the client 404 may allow the requested party 106 to provide the rules in an unstructured format which the client 404 may parse to form the rules. The rules may take the form of "if-then-else" statements. The rules may take the form of multiple statements. The rules may take the form of nested statements. The statements may include multiple conditional elements such as: greater than, less than; less than or equal to; greater than or equal to; equal; not equal; or; and; not; exclusive or. The statements may use text handling conditional elements for comparing similar names, misspelled names and so forth.

Examples of rules are: "If the requester is John Smith, then recommend that the requester use the voice mail box 555-1223; If the calendar indicates I am in the field, then recommend that the requester use mobile phone number 555-2523; If the request is between 5:00 PM and 9:00 AM then recommend that the requester use electronic mail blank@blank.com; If I am logged into an Instant Messaging Service and the status indicates I am available then recommend that the requester use the Instant Messaging Service; If the address book indicates that the requesting party is a member of "group number one" then the recommendation is "text advice number one"; else the recommendation is "text advice number two."

The profile information 306 may be generated by the communication profiling engine 410 and includes historical information. This may include data on how often a particular communication channel is used relative to a particular time period, or a particular requesting party 104. For example, a profile 306 may show that the requested party's work telephone 106 is typically used in the morning during the work week, while the requested party's mobile telephone 112 is typically used in the afternoon. A profile 306 may show that the requested party 106 and the requesting party 104 typically communicate via a particular communication channel, such as electronic mail 114. A profile 306 may show how much time the requested party 106 typically takes to respond when contacted via a particular communication channel. A profile 306 may include information on the number of electronic mail messages that the requested party 106 has responded to in a specified time period (e. g., 10 minutes or 5 hours). A profile 306 may include information about on the average length of time that the requested party 106 spends on the phone per communication. A profile 306 may include information on which communication channels have been used by the requesting party 104 to successfully communicate with the requested party 106 in the past. A profile 306 may show that the requesting party may take 1-3 days to respond to electronic mail 114 messages but has responded to multiple electronic mail 114 messages in the past half hour, therefore the recommendation may be to use electronic mail 114.

The communication profiling engine 410 may generate the profile 306 by taking into account historical data over a period of years, months, days; hours or any time period. The historical data may be weighted in favor of the most-recent behavior. The profile 306 may be presented to the requested party 106 via the client 404. The requested party 106 may alter the profile 306. The requested party 106 may specify how the profile 306 is generated.

The recommendation engine 408 may use information in the profile 306 to choose among communication channels by recommending the communication channel that is most likely to effectively reach the requested party 106. For example, the profile 306 may show that the requested party 106 uses the work phone 108 between the hours of 10:00 AM and 3:00 PM on a regular basis. Therefore, the recommendation engine 408 may recommend that the requesting party 104 contact the requested party 106 via the work phone 108.

The address book 310 includes information about particular requesting parties 104. Upon receiving a request for a recommendation, the recommendation engine 408 may determine if the address book 310 includes an entry for the requesting party 104. For example, the access adviser 102 may associate entries in the address book 310 with specific requesting parties 104 that are registered with the access adviser 102. Securely identifying the requesting party 104 may include registering the requesting party 104 with the access adviser 102. As another example, the access adviser 102 may determine a phone number that the requesting party 104 is using to contact the access adviser 102. The access adviser 102 may then search the address book 310 for the phone number to identify the requesting party 104 via the address book 310.

The address book 310 may be used to associate information about the contact privileges and limitations associated with requesting parties 106 listed in the address book 310 with conditional access rules included in the rule base 306. The recommendation engine 408 may use the address book 310 in conjunction with other information in the database 300 to generate the recommendation.

The recommendation engine 408 sends the recommendation to the requested party 104 via the client 402. The recommendation is based on the information and limitations set out in the information database 300 which is available to the recommendation engine 408. The client 402 may then initiate the communication via the recommended communication channel.

The foregoing detailed description of the present invention is provided for the purposes of illustration and is not intended to be exhaustive or to limit the invention to the embodiments disclosed. Accordingly, the scope of the present invention is defined by the appended claims.

## Claims

1. A method of providing information on a manner of communicating comprising:
- providing information (202) to an information server (406) regarding a plurality of communication channels which can be used to reach a first user;(106)
- receiving a request (204) from a second user (104) a recommendation on a manner of communicating with the first user;
- generating the recommendation (206) by the information server based on the information; and
- providing the recommendation to the second user,
**characterized in that** in the step of providing information, said information comprises real time information on the status of one or more of the plurality of communication channels.

2. The method of claim 1, wherein the information is provided by the first user.

3. The method of claim 2, wherein the information includes a text message which is provided to the second user as the recommendation.

4. The method of claim 2, wherein generating the recommendation is also based on information obtained from the second user.

5. The method of claim 4, wherein the second user provides information pertaining to the subject of the communication or the identity of the second user and wherein the recommendation is based at least in part on the subject of communication or the identity of the second user.

6. The method of claim 1, the information including a calendar with information regarding the first user, the recommendation being based at least in part on the calendar.

7. The method of claim 6, wherein the calendar is provided to the second user as the recommendation.

8. The method of claim 6, the recommendation including a communication initiation time at which to initiate communication with the first user.

9. The method of claim 8, further comprising setting an alarm for the communication initiation time on a device associated with the second user.

10. The method of claim 1, the information including one or more conditional access rules provided by the first user directing said generating the recommendation.

11. The method of claim 10, wherein the one or more conditional access rules comprises a rule that limits which communication channel is recommended to the second user based at least in part on the identity of the second user.

12. The method of claim 10, wherein the one or more conditional access rules comprises a rule that indicates a particular communication channel is to be recommended or is not to be recommended during a specified time period.

13. The method of claim 10, wherein a conditional access rule indicates that a particular communication channel is recommended depending on the status of the first user.

14. The method of claim 13, wherein the status of the first user is determined based on a calendar with information regarding the first user.

15. The method of claim 1, wherein the status of the communication channels includes a current availability of a particular communication channel for use.

16. The method of claim 1, wherein the provided information further includes a profile generated from past behavior of the first user.

17. The method of claim 16, wherein the profile includes an average time the first user has taken to respond to a communication and/or the profile includes a record of recent communications.

18. The method of claim 1, further comprising:
- offering to initiate a communication via a recommended communication channel;
- and initiating the communication via the recommended communication channel.

19. A system for providing information on a manner of communicating comprising:
- a database (300) arranged to store information received from a first user regarding a plurality of communication channels which can be used to reach the first user;
- a client arranged to receive a request from a second user (104) for a recommendation on a manner of communicating with the first user ;(106)
- an information server (406) arranged to generate the recommendation based on the information stored in the database
**characterized in that** information received from the first user comprises real time information on the status of one or more of the plurality of communication channels.

20. The system of claim 19, wherein the information server is further arranged to generate the recommendation based also on information obtained from the second user.

21. The system of claim 19, wherein the information database is further arranged to store one or more conditional access rules and to generate the recommendation based also on one or more of the conditional access rules.

22. The system of claim 19, wherein the information database is further arranged to store a profile generated from past behavior of the first user and to generate the recommendation based also on the profile.

23. The method of claim 19, wherein the information server is further arranged to generate the recommendation based also on the real time information.

## Patentansprüche

1. Verfahren zum Angeben von Informationen über eine Art und Weise der Kommunikation, mit den folgenden Schritten:
- einem Informationsserver (406) werden Informationen (202) bezüglich mehrerer Kommunikationskanäle gegeben, die benutzt werden können, um einen ersten Benutzer (106) zu erreichen;
- von einem zweiten Benutzer (104) wird eine Anforderung (204) einer Empfehlung über eine Art und Weise der Kommunikation mit dem ersten Benutzer empfangen;
- die Empfehlung (206) wird durch den Informationsserver auf der Basis der Informationen erzeugt; und
- die Empfehlung wird dem zweiten Benutzer gegeben,
**dadurch gekennzeichnet, daß** bei dem Schritt des Gebens von Informationen die Informationen Echtzeitinformationen über den Status eines oder mehrerer der mehreren Kommunikationskanäle umfassen.

2. Verfahren nach Anspruch 1, wobei die Informationen durch den ersten Benutzer angegeben werden.

3. Verfahren nach Anspruch 2, wobei die Informationen eine Textnachricht umfassen, die dem zweiten Benutzer als die Empfehlung gegeben wird.

4. Verfahren nach Anspruch 2, wobei das Erzeugen der Empfehlung auch auf Informationen basiert, die von dem zweiten Benutzer erhalten werden.

5. Verfahren nach Anspruch 4, wobei der zweite Benutzer Informationen gibt, die den Gegenstand der Kommunikation oder die Identität des zweiten Benutzers betreffen, und wobei die Empfehlung mindestens teilweise auf dem Gegenstand der Kommunikation oder der Identität des zweiten Benutzers basiert.

6. Verfahren nach Anspruch 1, wobei die Informationen einen Kalender mit Informationen bezüglich des ersten Benutzers umfassen, wobei die Empfehlung mindestens teilweise auf dem Kalender basiert.

7. Verfahren nach Anspruch 6, wobei der Kalender dem zweiten Benutzer als die Empfehlung gegeben wird.

8. Verfahren nach Anspruch 6, wobei die Empfehlung einen Kommunikationseinleitungszeitpunkt umfaßt, zu dem die Kommunikation mit dem ersten Benutzer einzuleiten ist.

9. Verfahren nach Anspruch 8, ferner mit dem Schritt des Setzens eines Alarms für den Kommunikationseinleitungszeitpunkt auf einer mit dem zweiten Benutzer assoziierten Einrichtung.

10. Verfahren nach Anspruch 1, wobei die Informationen eine oder mehrere durch den ersten Benutzer angegebene Zugangsberechtigungsregeln umfassen, die die Erzeugung der Empfehlung anleiten.

11. Verfahren nach Anspruch 10, wobei die eine bzw. die mehreren Zugangsberechtigungsregeln eine Regel umfassen, die mindestens teilweise auf der Basis der Identität des zweiten Benutzers begrenzt, welche Kommunikationskanäle dem zweiten Benutzer empfohlen werden.

12. Verfahren nach Anspruch 10, wobei die eine bzw. die mehreren Zugangsberechtigungsregeln eine Regel umfassen, die vorgibt, daß während eines spezifizierten Zeitraums ein bestimmter Kommunikationskanal empfohlen oder nicht empfohlen werden soll.

13. Verfahren nach Anspruch 10, wobei eine Zugangsberechtigungsregel vorgibt, daß ein bestimmter Kommunikationskanal abhängig von dem Status des ersten Benutzers empfohlen wird.

14. Verfahren nach Anspruch 13, wobei der Status des ersten Benutzers auf der Basis eines Kalenders mit Informationen bezüglich des ersten Benutzers bestimmt wird.

15. Verfahren nach Anspruch 1, wobei der Status der Kommunikationskanäle eine derzeitige Verfügbarkeit eines bestimmten Kommunikationskanals für Benutzung umfaßt.

16. Verfahren nach Anspruch 1, wobei die gegebenen Informationen ferner ein aus dem vergangenen Verhalten des ersten Benutzers erzeugtes Profil umfassen.

17. Verfahren nach Anspruch 16, wobei das Profil eine mittlere Zeit umfaßt, die der erste Benutzer gebraucht hat, um auf eine Kommunikation zu antworten, und/oder das Profil eine Aufzeichnung der Kommunikationen in letzter Zeit umfaßt.

18. Verfahren nach Anspruch 1, ferner mit den folgenden Schritten:
- es wird angeboten, eine Kommunikation über einen empfohlenen Kommunikationskanal einzuleiten;
- und die Kommunikation wird über den empfohlenen Kommunikationskanal eingeleitet.

19. System zum Angeben von Informationen über eine Art und Weise der Kommunikation, umfassend:
- eine Datenbank (300), die dafür ausgelegt ist, von einem ersten Benutzer empfangene Informationen bezüglich mehrerer Kommunikationskanäle zu speichern, die benutzt werden können, um den ersten Benutzer zu erreichen;
- einen Client, der dafür ausgelegt ist, von einem zweiten Benutzer (104) eine Anforderung einer Empfehlung über eine Art und Weise der Kommunikation mit dem ersten Benutzer (106) zu empfangen;
- einen Informationsserver (406), der dafür ausgelegt ist, die Empfehlung auf der Basis der in der Datenbank gespeicherten Informationen zu erzeugen,
**dadurch gekennzeichnet, daß** von dem ersten Benutzer empfangene Informationen Echtzeitinformationen über den Status eines oder mehrerer der mehreren Kommunikationskanäle umfassen.

20. System nach Anspruch 19, wobei der Informationsserver ferner dafür ausgelegt ist, die Empfehlung auch auf der Basis von Informationen zu erzeugen, die von dem zweiten Benutzer erhalten werden.

21. System nach Anspruch 19, wobei die Informationsdatenbank ferner dafür ausgelegt ist, eine oder mehrere Zugangsberechtigungsregeln zu speichern und die Empfehlung auch auf der Basis einer oder mehrerer der Zugangsberechtigungsregeln zu erzeugen.

22. System nach Anspruch 19, wobei die Informationsdatenbank ferner dafür ausgelegt ist, ein aus dem vergangenen Verhalten des ersten Benutzers erzeugtes Profil zu speichern und die Empfehlung auch auf der Basis des Profils zu erzeugen.

23. System nach Anspruch 19, wobei der Informationsserver ferner dafür ausgelegt ist, die Empfehlung auch auf der Basis der Echtzeitinformationen zu erzeugen.

## Revendications

1. Procédé de fourniture d'informations sur une manière de communiquer comprenant :
- la fourniture d'informations (202) à un serveur d'informations (406) concernant une pluralité de canaux de communication qui peuvent être utilisés pour atteindre un premier utilisateur (106) ;
- la réception d'une demande (204) d'un second utilisateur (104) pour une recommandation sur une manière de communiquer avec le premier utilisateur ;
- la génération de la recommandation (206) par le serveur d'informations sur la base des informations ; et
- la fourniture de la recommandation au second utilisateur,
**caractérisé en ce que** dans l'étape de fourniture d'informations, lesdites informations comprennent des informations en temps réel sur l'état d'un ou plusieurs de la pluralité de canaux de communication.

2. Procédé selon la revendication 1, dans lequel les informations sont fournies par le premier utilisateur.

3. Procédé selon la revendication 2, dans lequel les informations comprennent un message de texte qui est fourni au second utilisateur en tant que recommandation.

4. Procédé selon la revendication 2, dans lequel la génération de la recommandation se base également sur des informations obtenues auprès du second utilisateur.

5. Procédé selon la revendication 4, dans lequel le second utilisateur fournit des informations se rapportant au sujet de la communication ou à l'identité du second utilisateur et dans lequel la recommandation se base au moins en partie sur le sujet de la communication ou l'identité du second utilisateur.

6. Procédé selon la revendication 1, les informations comprenant un calendrier avec des informations concernant le premier utilisateur, la recommandation se basant au moins en partie sur le calendrier.

7. Procédé selon la revendication 6, dans lequel le calendrier est fourni au second utilisateur en tant que recommandation.

8. Procédé selon la revendication 6, la recommandation comprenant un temps de déclenchement de communication auquel déclencher une communication avec le premier utilisateur.

9. Procédé selon la revendication 8, comprenant en outre la définition d'une alarme pour le temps de déclenchement de communication sur un dispositif associé au second utilisateur.

10. Procédé selon la revendication 1, les informations comprenant une ou plusieurs règles d'accès conditionnelles fournies par le premier utilisateur dirigeant ladite génération de la recommandation.

11. Procédé selon la revendication 10, dans lequel l'une ou plusieurs règles d'accès conditionnelles comprennent une règle qui limite quel canal de communication est recommandé pour le second utilisateur sur la base au moins en partie de l'identité du second utilisateur.

12. Procédé selon la revendication 10, dans lequel l'une ou plusieurs règles d'accès conditionnelles comprennent une règle qui indique qu'un canal de communication particulier doit être recommandé ou ne doit pas être recommandé pendant un intervalle de temps spécifié.

13. Procédé selon la revendication 10, dans lequel une règle d'accès conditionnelle indique qu'un canal de communication particulier est recommandé selon l'état du premier utilisateur.

14. Procédé selon la revendication 13, dans lequel l'état du premier utilisateur est déterminé sur la base d'un calendrier avec des informations concernant le premier utilisateur.

15. Procédé selon la revendication 1, dans lequel l'état des canaux de communication comprend une disponibilité actuelle d'un canal de communication particulier pour une utilisation.

16. Procédé selon la revendication 1, dans lequel les informations fournies comprennent en outre un profil généré à partir d'un comportement passé du premier utilisateur.

17. Procédé selon la revendication 16, dans lequel le profil comprend un temps moyen que le premier utilisateur a mis pour répondre à une communication et/ou le profil comprend un enregistrement des communications récentes.

18. Procédé selon la revendication 1, comprenant en outre :
- l'offre de déclencher une communication par l'intermédiaire d'un canal de communication recommandé ;
- et le déclenchement de la communication par l'intermédiaire du canal de communication recommandé.

19. Système pour fournir des informations sur une manière de communiquer comprenant :
- une base de données (300) agencée pour stocker des informations reçues d'un premier utilisateur concernant une pluralité de canaux de communication qui peuvent être utilisés pour atteindre le premier utilisateur ;
- un client agencé pour recevoir une demande d'un second utilisateur (104) pour une recommandation sur une manière de communiquer avec le premier utilisateur (106) ; et
- un serveur d'informations (406) agencé pour générer la recommandation sur la base des informations stockées dans la base de données,
**caractérisé en ce que** des informations reçues du premier utilisateur comprennent des informations en temps réel sur l'état d'un ou plusieurs de la pluralité de canaux de communication.

20. Système selon la revendication 19, dans lequel le serveur d'informations est en outre agencé pour générer la recommandation sur la base également des informations obtenues auprès du second utilisateur.

21. Système selon la revendication 19, dans lequel la base de données d'informations est en outre agencée pour stocker une ou plusieurs règles d'accès conditionnelles et générer la recommandation sur la base également d'une ou plusieurs des règles d'accès conditionnelles.

22. Système selon la revendication 19, dans lequel la base de données d'informations est en outre agencée pour stocker un profil généré à partir d'un comportement passé du premier utilisateur et générer la recommandation sur la base également du profil.

23. Système selon la revendication 19, dans lequel le serveur d'informations est en outre agencé pour générer la recommandation sur la base également des informations en temps réel.
